# EUROPEAN PATENT SPECIFICATION

(11) **EP 3 068 184 B1**
(45) Date of publication and mention of the grant of the patent: **09.05.2018**
(21) Application number: 13898625.2
(22) Date of filing: 04.12.2013
(51) Int. Cl.: H04W 76/02, H04W 8/00

(54) **WI-FI SYSTEM-BASED METHOD AND DEVICE FOR ESTABLISHING A LINK BETWEEN STATIONS**
WI-FI-BASIERTES VERFAHREN UND VORRICHTUNG ZUR HERSTELLUNG EINER VERBINDUNG ZWISCHEN STATIONEN
PROCÉDÉ ET DISPOSITIF REPOSANT SUR UN SYSTÈME WI-FI POUR L'ÉTABLISSEMENT D'UNE LIAISON ENTRE STATIONS

(43) Date of publication of application: 14.09.2016
(73) Proprietor: Huawei Technologies Co., Ltd., Longgang District Shenzhen, Guangdong 518129 (CN)
(72) Inventor: LIN, Yingpei, Shenzhen Guangdong 518129 (CN); ZHANG, Jiayin, Shenzhen, Guangdong 518129 (CN); LI, Yunbo, Shenzhen, Guangdong 518129 (CN)
(74) Representative: Epping - Hermann - Fischer
(86) International application number: PCT/CN2013/088551
(87) International publication number: WO 2015/081520

(56) References cited:
- WO-A1-2009/009394
- WO-A2-2012/091418
- WO-A2-2012/157941
- CN-A- 1 653 759
- CN-A- 101 442 478
- CN-A- 103 096 422
- US-A1- 2011 051 678

## Description

### TECHNICAL FIELD

The present invention relates to the field of communications technologies, and in particular, to a method and an apparatus for setting up a link between WiFi system-based stations.

### BACKGROUND

In a WiFi (Wireless Fidelity, Wireless Fidelity) network, when a source station needs to communicate with a target station, a direct link may be set up between the two stations, so as to improve communication efficiency.

When a direct link is set up between the two stations, the source station sends a request frame to an access device associated with the source station, and the access device forwards the request frame to the target station associated with the access device. The target station then determines, according to the request frame, whether to set up a direct link. If the target station agrees to set up a direct link, a direct link is set up between the two stations.

In a process of implementing the present invention, at least the following problems exist in the prior art:
In the solution, a direct link can be set up between the two stations only when the two stations are in a same BSS (Basic Service Set, basic service set) or are associated with a same access device. Therefore, a process of setting up a direct link inevitably has a relatively great limitation, and an application scope is relatively small.

US 2013/0322388 A1 and WO 2012/091418 A2 relate to a method of operating a network for direct device-to-device (D2D) communication. The method comprises requesting, by the network, serving cell base station(s) of first and second terminals to confirm D2D communication possibility between the first and second terminals in response to a connection setting request for the second terminal from the first terminal, or in accordance with self-determination of the network when a connection between the first and second terminals has been already created; determining, by the serving cell base station(s), whether or not the D2D communication between the first and second terminals is possible; setting a D2D connection between the first and second terminals; identifying closeness between the first and second terminals and base stations and closeness between the first and second terminals and terminals close to the first and second terminals; and allocating wireless resources for the D2D communication between the first and second terminals based on the closeness identified in the previous step in accordance with a resource allocation request of at least one of the first and second terminals.

### SUMMARY

To resolve problems in the prior art, embodiments of the present invention provide a method and an apparatus for setting up a link between WiFi system-based stations.

The invention is defined by the independent claims. Any occurrence of the term "embodiment" in the description has to be considered as an "aspect of the invention", the invention being defined only in the appended independent claims. Advantageous embodiments of the invention are given in the sub-claims.

The technical solution is as follows:
according to a first aspect, the method for setting up a link between WiFi system-based stations is provided, where the method includes:
receiving, by a source access device, a discovery request sent by a source station, where the discovery request includes at least a source station identifier and a target station identifier;
querying, when it is determined that a target station and the source station are associated with different access devices, a preset database according to the target station identifier, to obtain a target access device associated with the target station, where the preset database stores a correspondence between an access device and a station identifier and an access device that has a coordination relationship with the source access device;
when it is determined, by querying the preset database, that the source access device has a coordination relationship with the target access device, forwarding, by the source access device, the discovery request to the target access device, so that the target access device sends the discovery request to the target station, where when the target station determines that a direct link can be set up, the target station sends a discovery response to the source station;
acquiring, when the source access device receives a setup request sent by the source station and a setup response sent by the target station, resource information of the direct link according to a source station resource and capability information that are carried in the setup request and a target station resource and capability information that are carried in the setup response; and
sending the resource information of the direct link to the source station and the target station, so that the source station and the target station set up the direct link according to the resource information of the direct link.

With reference to the first aspect, in a first possible implementation manner of the first aspect, the setup request is sent to the source access device by the source station when the source station determines, according to quality of the direct link, that communication quality of the direct link is better than that of a specified link, where the specified link is a communication link between the source access device and the source station.

With reference to the first aspect, in a second possible implementation manner of the first aspect, the sending the resource information of the direct link to the source station and the target station, so that the source station and the target station set up the direct link according to the resource information of the direct link includes:
sending, by the source access device, the resource information of the direct link to the source station; and
sending, by the source access device, the resource information of the direct link to the target access device, so that the target access device forwards the resource information of the direct link to the target station, so that the source station and the target station set up the direct link according to the resource information of the direct link.

With reference to the first aspect, in a third possible implementation manner of the first aspect, the acquiring, when the source access device receives a setup request sent by the source station and a setup response sent by the target station, resource information of the direct link according to a source station resource and capability information that are carried in the setup request and a target station resource and capability information that are carried in the setup response includes:
when the source access device receives the setup request sent by the source station, sending the setup request to the target access device, so that the target access device forwards the setup request to the target station, and the target station sends the setup response to the target access device, so that the target access device forwards the setup response to the source access device; and
when receiving the setup response, determining the resource information of the direct link by performing negotiation with the target access device, where the negotiation is performed according to the source station resource and the capability information that are carried in the setup request and the target station resource and the capability information that are carried in the setup response.

With reference to the first aspect, in a fourth possible implementation manner of the first aspect, the acquiring, when the source access device receives a setup request sent by the source station and a setup response sent by the target station, resource information of the direct link according to a source station resource and capability information that are carried in the setup request and a target station resource and capability information that are carried in the setup response includes:
when the source access device receives the setup request sent by the source station, sending the setup request to the target access device, so that the target access device forwards the setup request to the target station, and the target station sends the setup response to the target access device, so that the target access device forwards the setup response to the source access device; and
when receiving the setup response, determining the resource information of the direct link according to the source station resource and the capability information that are carried in the setup request and the target station resource and the capability information that are carried in the setup response.

With reference to the first aspect, in a fifth possible implementation manner of the first aspect, the acquiring, when the source access device receives a setup request sent by the source station and a setup response sent by the target station, resource information of the direct link according to a source station resource and capability information that are carried in the setup request and a target station resource and capability information that are carried in the setup response includes:
when the source access device receives the setup request sent by the source station, sending the setup request to the target access device, so that the target access device determines the resource information of the direct link according to the target station resource and the capability information and the source station resource and the capability information that are carried in the setup request, and forwards the setup request to the target station, where the target access device sends, to the source access device, the setup response that carries the resource information of the direct link; and
when the source access device receives the setup response that carries the resource information of the direct link, acquiring the resource information of the direct link.

With reference to the first aspect, in a sixth possible implementation manner of the first aspect, after the querying, when it is determined that a target station and the source station are associated with different access devices, a preset database according to the target station identifier, to obtain a target access device associated with the target station, the method further includes:
when it is determined that the source access device does not have a coordination relationship with the target access device, sending a quit request to the source station, so that when receiving the quit request, the source station quits setting up the direct link with the target station.

With reference to the first aspect, in a seventh possible implementation manner of the first aspect, the discovery response is received by the source station in preset duration that is after the discovery request is sent.

With reference to the first aspect and any one of the first to the seventh possible implementation manners of the first aspect, in an eighth possible implementation manner of the first aspect, the source station and the target station exchange information by using three links that are respectively between the source station and the source access device, the source access device and the target access device, and the target access device and the target station, to acquire a preset password between the two stations, and after setting up the direct link, the source station and the target station acquire a communication key according to the preset password, and communicate based on the communication key.

According to a second aspect, the apparatus for setting up a link between WiFi system-based stations is provided, where the apparatus includes:
a receiving module, configured to receive, by a source access device, a discovery request sent by a source station, where the discovery request includes at least a source station identifier and a target station identifier;
a query module, configure to query, when it is determined that a target station and the source station are associated with different access devices, a preset database according to the target station identifier, to obtain a target access device associated with the target station, where the preset database stores a correspondence between an access device and a station identifier and an access device that has a coordination relationship with the source access device;
a sending module, configured to: when it is determined, by querying the preset database, that the source access device has a coordination relationship with the target access device, forward, by the source access device, the discovery request to the target access device, so that the target access device sends the discovery request to the target station, where when the target station determines that a direct link can be set up, the target station sends a discovery response to the source station; and
a resource information acquiring module, configured to acquire, when the source access device receives a setup request sent by the source station and a setup response sent by the target station, resource information of the direct link according to a source station resource and capability information that are carried in the setup request and a target station resource and capability information that are carried in the setup response; where
the sending module is further configured to send the resource information of the direct link to the source station and the target station, so that the source station and the target station set up the direct link according to the resource information of the direct link.

With reference to the second aspect, in a first possible implementation manner of the second aspect, the setup request is sent to the source access device by the source station when the source station determines, according to quality of the direct link, that communication quality of the direct link is better than that of a specified link, where the specified link is a communication link between the source access device and the source station.

With reference to the second aspect, in a second possible implementation manner of the second aspect, the sending module is further configured to: send, by the source access device, the resource information of the direct link to the source station; and send, by the source access device, the resource information of the direct link to the target access device, so that the target access device forwards the resource information of the direct link to the target station, so that the source station and the target station set up the direct link according to the resource information of the direct link.

With reference to the second aspect, in a third possible implementation manner of the second aspect, the resource information acquiring module is further configured to: when the source access device receives the setup request sent by the source station, send the setup request to the target access device, so that the target access device forwards the setup request to the target station, and the target station sends the setup response to the target access device, so that the target access device forwards the setup response to the source access device; and when receiving the setup response, determine the resource information of the direct link by performing negotiation with the target access device, where the negotiation is performed according to the source station resource and the capability information that are carried in the setup request and the target station resource and the capability information that are carried in the setup response.

With reference to the second aspect, in a fourth possible implementation manner of the second aspect, the resource information acquiring module is further configured to: when the source access device receives the setup request sent by the source station, send the setup request to the target access device, so that the target access device forwards the setup request to the target station, and the target station sends the setup response to the target access device, so that the target access device forwards the setup response to the source access device; and when receiving the setup response, determine the resource information of the direct link according to the source station resource and the capability information that are carried in the setup request and the target station resource and the capability information that are carried in the setup response.

With reference to the second aspect, in a fifth possible implementation manner of the second aspect, the resource information acquiring module is further configured to: when the source access device receives the setup request sent by the source station, send the setup request to the target access device, so that the target access device determines the resource information of the direct link according to the target station resource and the capability information and the source station resource and the capability information that are carried in the setup request, and forwards the setup request to the target station, where the target access device sends, to the source access device, the setup response that carries the resource information of the direct link; and when the source access device receives the setup response that carries the resource information of the direct link, acquire the resource information of the direct link.

With reference to the second aspect, in a sixth possible implementation manner of the second aspect, the sending module is further configured to: when it is determined that the source access device does not have a coordination relationship with the target access device, send a quit request to the source station, so that when receiving the quit request, the source station quits setting up the direct link with the target station.

With reference to the second aspect, in a seventh possible implementation manner of the second aspect, the discovery response is received by the source station in preset duration that is after the discovery request is sent.

With reference to the second aspect and any one of the first to the seventh possible implementation manners of the second aspect, in an eighth possible implementation manner of the second aspect, the source station and the target station exchange information by using three links that are respectively between the source station and the source access device, the source access device and the target access device, and the target access device and the target station, to acquire a preset password between the two stations, and after setting up the direct link, the source station and the target station acquire a communication key according to the preset password, and communicate based on the communication key.

The technical solution provided in the embodiments of the present invention brings the following beneficial effects:
It is determined, by receiving a discovery request sent by a source station, that a target station and the source station are associated with different access devices, and a target access device associated with the target station is obtained by querying a preset database; when it is determined that a source access device has a coordination relationship with the target access device, the source access device forwards the discovery request to the target access device, and initiates a process of setting up a direct link. In this way, two stations that are in different BSSs or are associated with different access devices can set up a direct link to perform communication, which greatly reduces a limitation on a process of setting up a direct link in the prior art, and enlarges an application scope.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show only some embodiments of the present invention, and a person of ordinary skill in the art may still derive other drawings from these accompanying drawings without creative efforts.
FIG. 1 is a flowchart of a method for setting up a link between WiFi system-based stations according to an embodiment of the present invention;
FIG. 2A, FIG. 2B, and FIG. 2C are a flowchart of a method for setting up a link between WiFi system-based stations according to an embodiment of the present invention;
FIG. 3A and FIG. 3B are a flowchart of a method for setting up a link between WiFi system-based stations according to an embodiment of the present invention;
FIG. 4 is a schematic structural diagram of an apparatus for setting up a link between WiFi system-based stations according to an embodiment of the present invention; and
FIG. 5 is a schematic structural diagram of an access device according to an embodiment of the present invention.

### DESCRIPTION OF EMBODIMENTS

To make objectives, technical solutions, and advantages of the present invention clearer, the following further describes implementation manners of the present invention in detail with reference to the accompanying drawings.

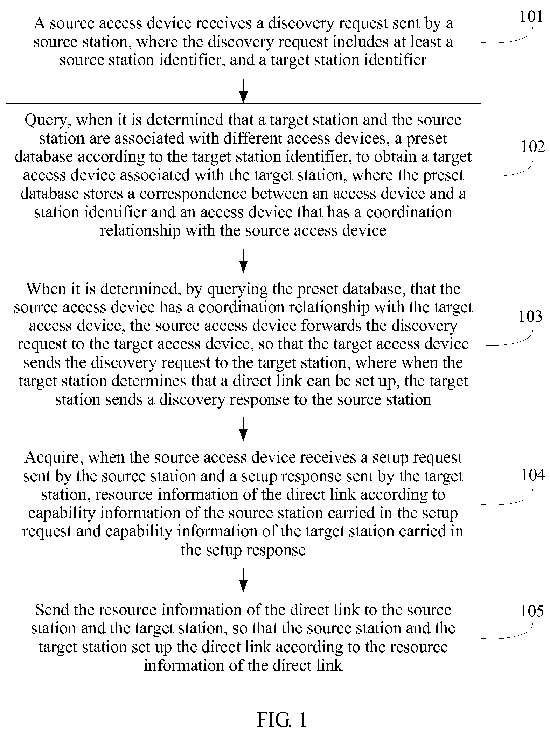

FIG. 1 is a flowchart of a method for setting up a link between WiFi system-based stations according to an embodiment of the present invention. Referring to FIG. 1, this embodiment is executed by a source access device, and the method includes the following steps:
101. The source access device receives a discovery request sent by a source station, where the discovery request includes at least a source station identifier and a target station identifier.
102. Query, when it is determined that a target station and the source station are associated with different access devices, a preset database according to the target station identifier, to obtain a target access device associated with the target station, where the preset database stores a correspondence between an access device and a station identifier and an access device that has a coordination relationship with the source access device.
103. When it is determined, by querying the preset database, that the source access device has a coordination relationship with the target access device, the source access device forwards the discovery request to the target access device, so that the target access device sends the discovery request to the target station, where when the target station determines that a direct link can be set up, the target station sends a discovery response to the source station.
104. Acquire, when the source access device receives a setup request sent by the source station and a setup response sent by the target station, resource information of the direct link according to a source station resource and capability information that are carried in the setup request and a target station resource and capability information that are carried in the setup response.
105. Send the resource information of the direct link to the source station and the target station, so that the source station and the target station set up the direct link according to the resource information of the direct link.

According to the method provided in this embodiment of the present invention, when a discovery request sent by a source station is received, if it is determined that a target station and the source station are associated with different access devices, a target access device associated with the target station is obtained by querying a preset database, and when it is determined that a source access device has a coordination relationship with the target access device, the source access device forwards the discovery request to the target access device, and initiates a process of setting up a direct link. In this way, two stations that are in different BSSs or are associated with different access devices can set up a direct link to perform communication, which greatly reduces a limitation on a process of setting up a direct link in the prior art, and enlarges an application scope.

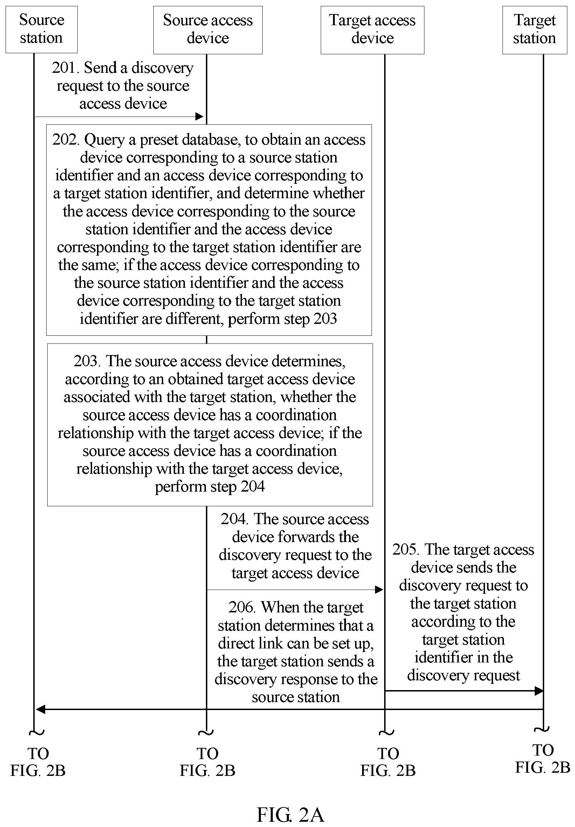

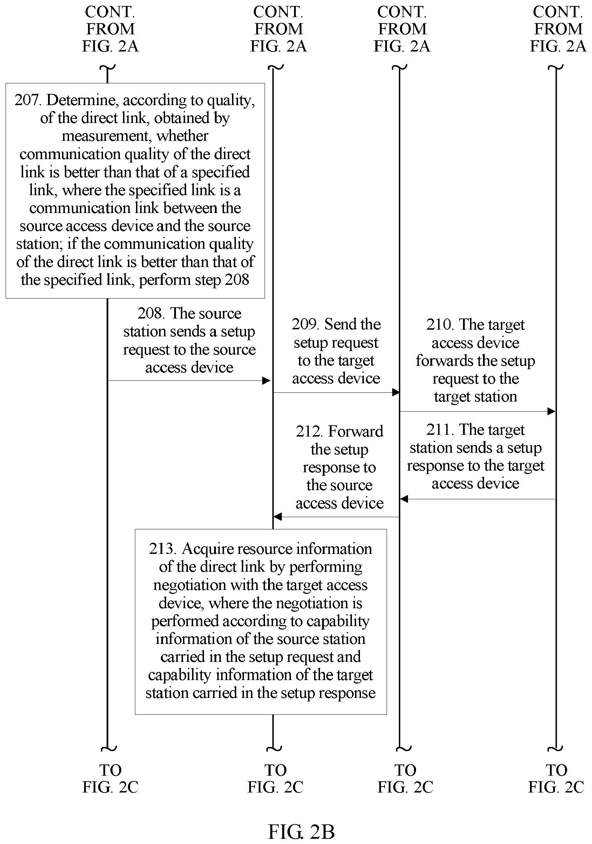

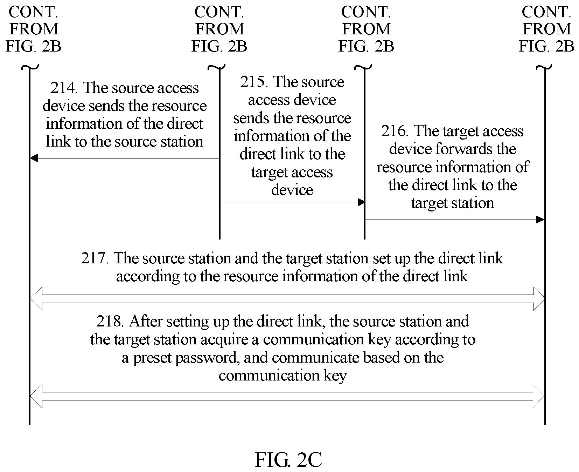

FIG. 2A, FIG. 2B, and FIG. 2C are a flowchart of a method for setting up a link between WiFi system-based stations according to an embodiment of the present invention. Referring to FIG. 2A, FIG. 2B, and FIG. 2C, this embodiment is executed by a source station, a source access device, a target access device, and a target station, and a process of the method includes the following steps:
201. The source station sends a discovery request to the source access device, where the discovery request includes at least a source station identifier and a target station identifier.

The source station identifier may be a MAC address, a name, a station ID (Identity, identity), or the like of the source station, which is not limited in this embodiment of the present invention. The target station identifier is similar to the source station identifier, and details are not described herein again.

The source access device refers to an access device associated with the source station. When sending information to another station, the source station may send the information to the source access device, and the source access device forwards the information to the another station.

The source station sends, to the source access device, the discovery request that carries the target station identifier, so that the source access device can determine, according to the target station identifier, whether the target station can be found.

202. When the source access device receives the discovery request, the source access device queries a preset database according to the source station identifier and the target station identifier, to obtain an access device corresponding to the source station identifier and an access device corresponding to the target station identifier, and determines whether the access device corresponding to the source station identifier and the access device corresponding to the target station identifier are the same, where the preset database stores a correspondence between an access device and a station identifier and an access device that has a coordination relationship with the source access device.

Specifically, the source access device queries the preset database according to the source station identifier and the target station identifier that are in the discovery request, to obtain the access device corresponding to the source station identifier and the access device corresponding to the target station identifier respectively, and determines whether the access device corresponding to the source station identifier and that corresponding to the target station identifier are the same. When the access device corresponding to the source station identifier and that corresponding to the target station identifier are the same, the source station and the target station may set up a direct link by using the common access device, and a process of setting up the direct link is a commonly used existing method for setting up a direct link, and details are not described herein again; when the access device corresponding to the source station identifier and that corresponding to the target station identifier are different, step 203 is performed.

The preset database is stored in the source access device, and the preset database stores the correspondence between an access device and a station identifier, for example, an access device corresponding to a station identifier A may be AP1.

It should be noted that, the determining whether the access device corresponding to the source station identifier and that corresponding to the target station identifier are the same may be in another manner in addition to the foregoing manner, which is not limited in this embodiment of the present invention.

203. When the source access device determines that the target station and the source station are associated with different access devices, the source access device determines, according to an obtained target access device associated with the target station, whether the source access device has a coordination relationship with the target access device, where when the access device, stored in the preset database, that has a coordination relationship with the source access device includes the target access device, the source access device determines that the source access device has a coordination relationship with the target access device, and step 204 is performed; if not, the process ends.

Specifically, when the source access device determines that the target station and the source station are associated with different access devices, the source access device queries the preset database according to the target station identifier in the discovery request, to obtain the target access device associated with the target station identifier, and queries the preset database according to the target access device, to determine whether the source access device has a coordination relationship with the target access device. The coordination relationship refers to that there is a coordination interface between two access devices, and the two access devices can transmit information to each other by using the coordination interface. In this way, the two access devices can exchange information by using the coordination interface, thereby setting up a reliable coordination relationship.

The foregoing processes in step 202 and step 203 are described by using an example in which the source access device needs to query the preset database twice, and in another embodiment provided in the embodiments of the present invention, a first preset database and a second preset database may be deployed on the source access device. The first preset database stores the correspondence between an access device and a station identifier, and the second database stores the access device that has a coordination relationship with the source access device; then a process in the foregoing step 202 may be replaced by the following step: when the source access device receives the discovery request, the source access device queries the first preset database according to the source station identifier and the target station identifier, to obtain an access device corresponding to the source station identifier and an access device corresponding to the target station identifier, and determines whether the access device corresponding to the source station identifier and the access device corresponding to the target station identifier are the same; accordingly, a process in step 203 may be replaced by the following step: when determining that the target station and the source station are associated with different access devices, the source access device queries the second preset database according to the obtained target access device associated with the target station, to determine whether the source access device has a coordination relationship with the target access device.

Optionally, the queries in step 202 and step 203 may further be completed by one query, that is, when the source access device receives the discovery request, the source access device queries the preset database according to the source station identifier and the target station identifier, to obtain an access device corresponding to the source station identifier and an access device corresponding to the target station identifier, and determines whether the access device corresponding to the source station identifier and the access device corresponding to the target station identifier are the same, so that the target access device associated with the target station is obtained, and the source access device determines whether the source access device has a coordination relationship with the target access device.

204. When it is determined, by querying the preset database, that the source access device has a coordination relationship with the target access device, the source access device forwards the discovery request to the target access device.

Specifically, when the source access device determines, by querying the preset database, that the source access device has a coordination relationship with the target access device, the source access device sends the discovery request to the target access device by using a coordination interface between the source access device and the target access device.

Further, when the access device, stored in the preset database, that has a coordination relationship with the source access device does not include the target access device, the source access device determines that the source access device does not have a coordination relationship with the target access device, and in this case, the source access device may execute any of the following processes: 1. When determining that the source access device does not have a coordination relationship with the target access device, the source access device sends a quit request to the source station, so that when receiving the quit request, the source station quit setting up the direct link with the target station; 2. When determining that the source access device does not have a coordination relationship with the target access device, the source access device may not perform any operation, and when preset duration expires, because the source station does not receive any information, the source station quits setting up the direct link or changes the target station identifier and resends a discovery request to the source access device. For example, the source station identifier and the target station identifier are represented by using station names, that is, STA1 represents the source station, STA2 represents the target station, API represents the source access device, AP2 represents the target access device, and the access device, stored in the preset database, associated with STA2 is AP2; then an access device that is associated with STA2 and is obtained by querying the preset database by API is AP2, that is, the target station and the source station are associated with different access devices, and tAP1 determines, by querying the preset database, whether API has a coordination relationship with AP2. When an access device, stored in the preset database, that has a coordination relationship with AP1 includes AP3, AP6, and AP9, AP1 determines that AP1 does not have a coordination relationship with AP2; when the access device, stored in the preset database, that has a coordination relationship with AP1 includes AP2, AP6, and AP8, AP1 determines that AP1 has a coordination relationship with AP2.

205. When the target access device receives the discovery request, the target access device sends the discovery request to the target station according to the target station identifier in the discovery request.

Specifically, when the target access device receives the discovery request sent by the source access device, the target access device sends the discovery request to the target station according to the target station identifier in the discovery request.

206. When the target station determines that a direct link can be set up, the target station sends a discovery response to the source station, where the discovery response includes the source station identifier and the target station identifier.

The discovery response may include only the source station identifier and the target station identifier, and certainly, in order to better determine whether the direct link should be set up, the discovery response may further include other information.

Specifically, when the target station receives the discovery request, the target station determines, according to an expansion capability element included in attribute information of the target station, whether to support setting up the direct link, where a capability field in the expansion capability element includes information about whether the target station supports setting up the direct link, and when record information in the capability field of the target station is information corresponding to supporting setting up the direct link, the target station supports setting up the direct link, and the target station sends, according to the source station identifier in the discovery request, the discovery response to the source station corresponding to the source station identifier.

When the record information in the capability field of the target station is information corresponding to forbidding setting up the direct link, the target station forbids setting up the direct link; then the target station sends a reject response to the source station, and when receiving the reject response, the source station quits setting up the direct link. In step 206, an example in which the target station determines that the direct link can be set up is used for description.

The expansion capability element may be stored in a table form, as shown in Table 1.

**Table 1**

| **Element ID** | **Length** | **Capability field** |
|---|---|---|
| 1 | 1 | n |
| 3 | 8 | k |

As shown in Table 1, the expansion capability element may include an element ID, a length of the element, and a capability field; where the capability field includes a capability of supporting setting up a direct link by a station, and content of the capability field may be stored in a table form, as shown in Table 2.

**Table 2**

| **Bit** | **Information** | **Record** |
|---|---|---|
| 49 | Support setting up a direct link | A |
| 50 | Forbid setting up a direct link | B |

Referring to Table 2, the capability field of the station includes information about supporting setting up the direct link and forbidding setting up the direct link, and the station may indicate, according to record information A about supporting setting up the direct link or record information B about forbidding setting up the direct link, whether the station supports setting up the direct link. A is a detailed description about a case in which the target station supports setting up the direct link, for example, when A=I, the target station supports setting up the direct link; when A=0, the target station does not support setting up the direct link. B is a detailed description about a case in which the target station forbids setting up the direct link. Certainly, specific content of A and B may have multiple representation manners, and this embodiment of the present invention sets no limitation on the specific content of A and B.

Optionally, when the source station receive no response in the preset duration, the source station quits setting up the direct link or changes the target station identifier, resends a discovery request to the source access device, and executes a process in step 201. When the source station receives a reject response in the preset duration, the source station quits setting up the direct link or changes the target station identifier, resends a discovery request to the source access device, and executes a process in step 201.

207. When determining that the target station supports setting up the direct link, the source station determines, according to quality, of the direct link, obtained by measurement, whether communication quality of the direct link is better than that of a specified link, where the specified link is a communication link between the source access device and the source station.

Specifically, when the target station supports setting up the direct link, the target station may send the discovery response to the source station, and when receiving the discovery response, the source station obtains information such as a signal-to-noise ratio of the direct link by measurement, compares the information with information such as a signal-to-noise ratio of the communication link between the source access device and the source station, and determines whether the communication quality of the direct link is better than that of the specified link.

208. When the source station determines, according to the quality of the direct link, that the communication quality of the direct link is better than that of the specified link, the source station sends a setup request to the source access device, where the setup request carries at least the source station identifier, the target station identifier, a source station resource, and capability information.

Specifically, when the communication quality of the direct link is better than communication quality of the specified link, compared with the link between the source station and the source access device, communication performed by setting up the direct link between the source station and the target station is a process worth executing; therefore, the source station marks the target station as a station that can set up a direct link with the source station. When the source station needs to set up the direct link with the target station, the source station sends the setup request to the source access device, so as to request the target station to set up the direct link.

Optionally, when the communication quality of the direct link is not better than the communication quality of the specified link, the source station quits setting up the direct link, or changes the target station identifier and reinitiates a process of discovering a station. Specifically, when the communication quality of the direct link is not better than the communication quality of the specified link, compared with link communication between the source station and the source access device, communication performed by setting up the direct link between the source station and the target station is a process not worth executing; therefore, the source station quits setting up the direct link.

209. When receiving the setup request sent by the source station, the source access device sends the setup request to the target access device.

Specifically, when the source access device receives the setup request sent by the source station, the source access device queries the preset database according to the target station identifier in the setup request, to obtain the target access device corresponding to the target station identifier, and sends the setup request to the target access device.

Optionally, the foregoing step 209 may further be: when the source station marks the target station as the station that can set up a direct link with the source station, an identifier corresponding to the target access device associated with the target station is stored in the source station, so that when the source station needs to set up the direct link with the target station, the source station writes, into the setup request, the identifier corresponding to the target access device associated with the target station, and when receiving the setup request, the source access device directly sends the setup request to the target access device according to the identifier that is in the setup request and is corresponding to the target access device.

210. When the target access device receives the setup request, the target access device forwards the setup request to the target station.

Specifically, when the target access device receives the setup request, the target access device sends, according to the target station identifier in the setup request, the setup request to the target station corresponding to the target station identifier.

211. When the target station receives the setup request, the target station sends a setup response to the target access device, where the setup response includes at least the source station identifier, the target station identifier, a target station resource, and capability information.

In step 206, the target station has determined that the direct link can be set up; therefore, in step 211, the target station may directly sends the setup response to the target access device after receiving the setup request.

Optionally, when receiving the setup request, the target station determines, according to the source station resource and the capability information that are in the setup request, whether the direct link can be set up between the target station and the source station, and when it is determined that the direct link can be set up between the target station and the source station, the target station sends the setup response to the target access device, where the determining whether the direct link can be set up between the target station and the source station includes: the target station compares the source station resource and the capability information that are in the setup request with the target station resource and the capability information, and when the two station resources and the capability information are respectively matched, the target station determines that the direct link can be set up between the target station and the source station, or when the two station resources and the capability information are not respectively matched, the target station determines that the direct link cannot be set up between the target station and the source station.

Whether the resources and the capability information are respectively matched may be determined according to a parameter such as a bandwidth. For example, by using a bandwidth as an example, a preset threshold value of the bandwidth is 60MB, and when a largest bandwidth supported by the source station is 90MB, and a largest bandwidth supported by the target station is 70MB, a bandwidth capability that is commonly reached by the two stations is 70MB, which exceeds the preset threshold value 60MB. In this case, the target station determines that the direct link can be set up between the target station and the source station, and the target station sends the setup response to the target access device.

Optionally, after determining whether the direct link can be set up with the source station, the target station may enable the source station to learn a determining result in the following manner: the target station sends, to the target access device according to the source station identifier in the setup request, response information that carries information about whether the target station can set up the direct link with the source station; further, when receiving the response information, the target access device forwards the response information to the source access device, and the source access device then sends the response information to the source station, so that the source station determines, according to the information that is about whether the target station can set up the direct link with the source station and is included in the response information, whether to set up the direct link with the target station; when the direct link can be set up between the two stations, the source access device receives resource information of the direct link sent by the source station, and when the direct link cannot be set up between the two stations, the source station sends a quit request to the source access device, and the source station quits setting up the direct link.

212. When receiving the setup response, the target access device forwards the setup response to the source access device.

Optionally, when the target access device receives the setup response, the target access device determines, according to the source station identifier carried in the setup response, the source access device by using the preset database, and sends the setup response to the source access device by using the coordination interface between the target access device and the source access device.

213. When receiving the setup response, the source access device acquires resource information of the direct link by performing negotiation with the target access device, where the negotiation is performed according to the source station resource and the capability information that are carried in the setup request and the target station resource and the capability information that are carried in the setup response.

Specifically, when receiving the setup response, the source access device negotiates, according to the source station resource and the capability information and the target station resource and capability information, with the target access device on a resource used by the direct link for communication, to acquire information in the resource information of the direct link, such as a spectrum location in which the direct link is set up between the two stations, and a communication manner of the two stations on the direct link.

In the foregoing step 213, a process in which the source access device acquires the resource information of the direct link is obtained by the source access device and the target access device by negotiation; however, in addition to the negotiation performed by the target access device and the source access device, the process in which the source access device acquires the resource information of the direct link may be obtained in any of the following manners:
1. When receiving the setup response, the source access device determines the resource information of the direct link according to the source station resource and the capability information that are carried in the setup request and the target station resource and the capability information that are carried in the setup response.

The source access device may determine, according to the source station resource and the capability information that are carried in the setup request and the target station resource and the capability information that are carried in the setup response, whether the source station resource and the capability information respectively match the target station resource and the capability information; when the source station resource and the capability information respectively match the target station resource and the capability information, matched capability information, for example, a supported bandwidth and an available bandwidth, may be acquired from the source station resource and the capability information and the target station resource and the capability information.

2. When receiving the setup request sent by the source station, the source access device sends the setup request to the target access device, so that the target access device determines the resource information of the direct link according to the target station resource and the capability information and the source station resource and the capability information that are carried in the setup request, and forwards the setup request to the target station, where the target access device sends, to the source access device, the setup response that carries the resource information of the direct link; and when receiving the setup response that carries the resource information of the direct link, the source access device acquires the resource information of the direct link.

The target station resource and the capability information may be pre-stored in the target access device, or may be acquired from the target station by the target access device when receiving the setup request. A process may be specifically: when receiving the setup request, the target access device forwards the setup request to the target station; when receiving the setup request, the target station returns the target station resource and the capability information to the target access device; and when receiving the target station resource and the capability information, the target access device determines the resource information of the direct link according to the target station resource and the capability information and the source station resource and the capability information. When the target access device determines the resource information of the direct link, the target access device separately sends the resource information of the direct link to the target station and the source access device.

Certainly, in addition to the foregoing manners, the resource information of the direct link may be acquired in another manner, which is not limited in this embodiment of the present invention.

214. The source access device sends the resource information of the direct link to the source station.

215. The source access device sends the resource information of the direct link to the target access device.

In a process in which the source access device sends the resource information of the direct link to the target access device and the source station, the source access device first sends the resource information of the direct link to the target access device, or first sends the resource information of the direct link to the source station, which is not limited in this embodiment of the present invention.

216. The target access device forwards the resource information of the direct link to the target station.

Specifically, when receiving the resource information of the direct link, the target access device sends the resource information of the direct link to the target station according to the target station identifier carried in the resource information of the direct link.

217. The source station and the target station set up the direct link according to the resource information of the direct link.

Specifically, when the source station and the target station receive the resource information of the direct link, the source station and the target station set up the direct link according to the information provided in the resource information of the direct link, such as the spectrum location in which the direct link is set up, and the communication manner of the direct link.

218. After setting up the direct link, the source station and the target station acquire a communication key according to a preset password, and communicate based on the communication key.

Specifically, the source station and the target station exchange information by using three links that are respectively between the source station and the source access device, the source access device and the target access device, and the target access device and the target station, to acquire the preset password between the two stations; after setting up the direct link, the source station and the target station acquire the communication key according to the preset password, and the source station communicates with the target station by using the communication key. Because the communication key is only used for communication between the source station and the target station, and the source access device and the target access device cannot obtain the communication key, and therefore communication of the direct link is securer.

According to the method provided in this embodiment of the present invention, when a discovery request sent by a source station is received, if it is determined that a target station and the source station are associated with different access devices, a target access device associated with the target station is obtained by querying a preset database, and when it is determined that a source access device has a coordination relationship with the target access device, the source access device forwards the discovery request to the target access device, and initiates a process of setting up a direct link. In this way, two stations that are in different BSSs or are associated with different access devices can set up a direct link to perform communication, which greatly reduces a limitation on a process of setting up a direct link in the prior art, and enlarges an application scope. Further, by acquiring a communication key of the direct link, communication security is strengthened when the two stations communicate by using the direct link.

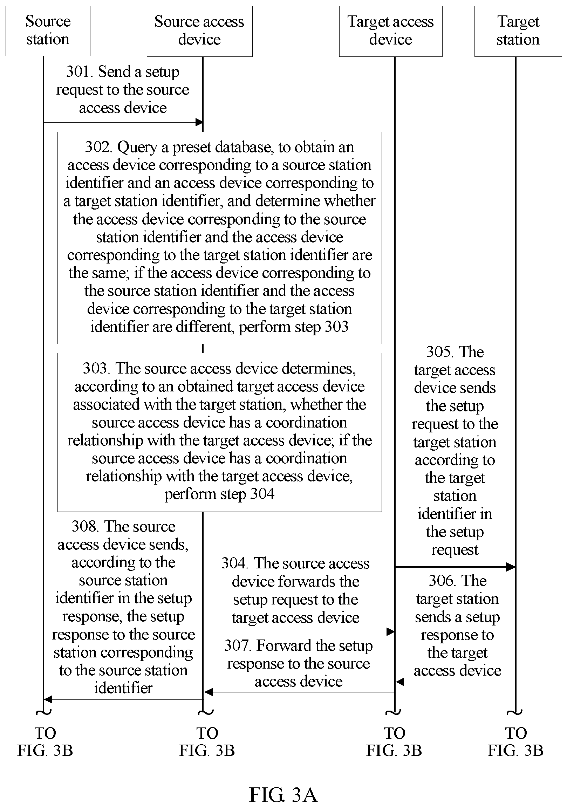

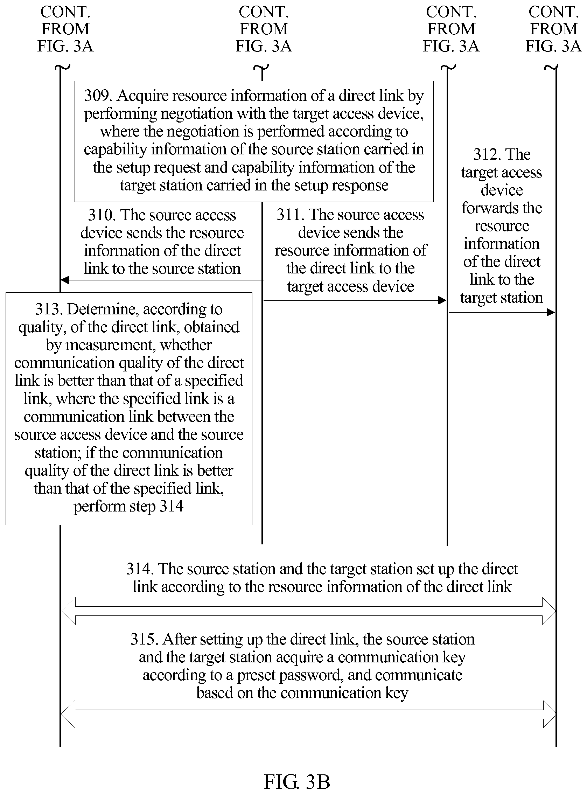

FIG. 3A and FIG. 3B are a flowchart of a method for setting up a link between WiFi system-based stations according to an embodiment of the present invention. Referring to FIG. 3A and FIG. 3B, the method includes the following steps:
301. A source station sends a setup request to a source access device.

The setup request includes at least a source station identifier, a target station identifier, a source station resource, and capability information.

302. When receiving the setup request, the source access device queries a preset database according to the source station identifier and the target station identifier, to obtain an access device corresponding to the source station identifier and an access device corresponding to the target station identifier, and determines whether the access device corresponding to the source station identifier and the access device corresponding to the target station identifier are the same. A process in step 302 is similar to that in step 202, and details are not described herein again.

303. When the source access device determines that a target station and the source station are associated with different access devices, the source access device determines, according to an obtained target access device associated with the target station, whether the source access device has a coordination relationship with the target access device.

A process in step 303 is similar to that in step 203, and details are not described herein again.

304. When it is determined, by querying the preset database, that the source access device has a coordination relationship with the target access device, the source access device forwards the setup request to the target access device.

A process in step 304 is similar to that in step 204, and details are not described herein again.

305. When the target access device receives the setup request, the target access device sends the setup request to the target station according to the target station identifier in the setup request.

A process in step 305 is similar to that in step 205, and details are not described herein again.

306. When the target station determines that a direct link can be set up, the target station sends a setup response to the target access device, where the setup response includes at least the source station identifier, the target station identifier, a target station resource, and capability information.

A process in step 306 is to a combination of step 206 and step 211, that is, the target station determines, according to an expansion capability element included in attribute information of the target station, that the target station supports setting up the direct link, and determines, according to the capability information that is of the source station and is in the setup request, that the direct link can be set up between the target station and the source station, and then the target station sends the setup response to the target access device. For a specific process, refer to step 206 and step 211, and details are not described herein again.

307. When receiving the setup response, the target access device forwards the setup response to the source access device.

A process in step 307 is similar to that in step 212, and details are not described herein again. 308. When the source access device receives the setup response, the source access device sends, according to the source station identifier in the setup response, the setup response to the source station corresponding to the source station identifier.

Step 308 is actually an optional step, and in this embodiment of the present invention, the setup response may not be sent to the source station.

309. When receiving the setup response, the source access device acquires resource information of the direct link by performing negotiation with the target access device, where the negotiation is performed according to the source station resource and the capability information that are carried in the setup request and the target station resource and the capability information that are carried in the setup response.

A process in step 309 is similar to that in step 213, and details are not described herein again.

310. The source access device sends the resource information of the direct link to the source station.

A process in step 310 is similar to that in step 214, and details are not described herein again.

311. The source access device sends the resource information of the direct link to the target access device.

A process in step 311 is similar to that in step 215, and details are not described herein again.

312. The target access device forwards the resource information of the direct link to the target station.

A process in step 312 is similar to that in step 216, and details are not described herein again.

313. When determining that the target station supports setting up the direct link, the source station determines, according to quality, of the direct link, obtained by measurement, whether communication quality of the direct link is better than that of a specified link, where the specified link is a communication link between the source access device and the source station.

A process in step 313 is similar to that in step 207, and details are not described herein again. Further, when the source access device learns that the communication quality of the direct link is better than communication quality of the specified link, step 314 is performed.

It should be noted that, a process in the foregoing step 313 may be performed after step 309, that is, after the resource information of the direct link is acquired, the source station determines, according to the quality, of the direct link, obtained by measurement, whether the communication quality of the direct link is better than that of the specified link, and when the communication quality of the direct link is better than that of the specified link, step 310 is performed. Certainly, step 313 may further be performed after step 310, and in this embodiment of the present invention, a current time sequence is merely used as an example for description.

314. The source station and the target station set up the direct link according to the resource information of the direct link.

A process in step 314 is similar to that in step 217, and details are not described herein again.

315. After setting up the direct link, the source station and the target station acquire a communication key according to a preset password, and communicate based on the communication key.

A process in step 315 is similar to that in step 218, and details are not described herein again.

According to the method provided in this embodiment of the present invention, when a setup request sent by a source station is received, if it is determined that a target station and the source station are associated with different access devices, a target access device associated with the target station is obtained by querying a preset database, and when it is determined that a source access device has a coordination relationship with the target access device, the source access device forwards the setup request to the target access device, and initiates a process of setting up a direct link. In this way, two stations that are in different BSSs or are associated with different access devices can set up a direct link to perform communication, which greatly reduces a limitation on a process of setting up a direct link in the prior art, and enlarges an application scope. Further, by acquiring a communication key of the direct link, communication security is strengthened when the two stations communicate by using the direct link.

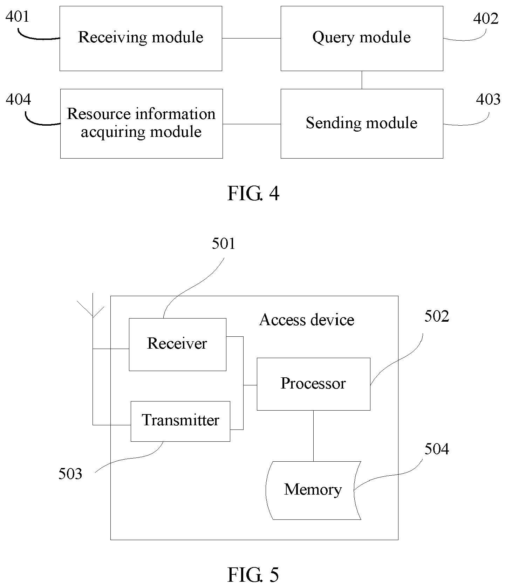

FIG. 4 is a schematic structural diagram of an apparatus for setting up a link between WiFi system-based stations according to an embodiment of the present invention. Referring to FIG. 4, the apparatus includes: a receiving module 401, a query module 402, a sending module 403, and a resource information acquiring module 404. The receiving module 401 is configured to receive, by a source access device, a discovery request sent by a source station, where the discovery request includes at least a source station identifier and a target station identifier; the receiving module 401 is connected to the query module 402, and the query module 402 is configured to query, when it is determined that a target station and the source station are associated with different access devices, a preset database according to the target station identifier, to obtain a target access device associated with the target station, where the preset database stores a correspondence between an access device and a station identifier, and an access device that has a coordination relationship with the source access device; the query module 402 is connected to the sending module 403, and the sending module is configured to: when it is determined, by querying the preset database, that the source access device has a coordination relationship with the target access device, forward, by the source access device, the discovery request to the target access device, so that the target access device sends the discovery request to the target station, where when the target station determines that a direct link can be set up, the target station sends a discovery response to the source station; and the sending module 403 is connected to the resource information acquiring module 404, and the resource information acquiring module 404 is configured to determine, when the source access device receives a setup request sent by the source station and a setup response sent by the target station, resource information of the direct link according to a source station resource and capability information that are carried in the setup request and a target station resource and capability information that are carried in the setup response; where the sending module 403 is further configured to send the resource information of the direct link to the source station and the target station, so that the source station and the target station set up the direct link according to the resource information of the direct link.

Optionally, the setup request is sent to the source access device by the source station when the source station determines, according to quality of the direct link, that communication quality of the direct link is better than that of a specified link, where the specified link is a communication link between the source access device and the source station.

Optionally, the sending module 403 is further configured to: send, by the source access device, the resource information of the direct link to the source station; and send, by the source access device, the resource information of the direct link to the target access device, so that the target access device forwards the resource information of the direct link to the target station, so that the source station and the target station set up the direct link according to the resource information of the direct link.

Optionally, the resource information acquiring module 404 is further configured to: when the source access device receives the setup request sent by the source station, send the setup request to the target access device, so that the target access device forwards the setup request to the target station, and the target station sends the setup response to the target access device, so that the target access device forwards the setup response to the source access device; and when receiving the setup response, determine the resource information of the direct link by performing negotiation with the target access device, where the negotiation is performed according to the source station resource and the capability information that are carried in the setup request and the target station resource and the capability information that are carried in the setup response. Optionally, the resource information acquiring module 404 is further configured to: when the source access device receives the setup request sent by the source station, send the setup request to the target access device, so that the target access device forwards the setup request to the target station, and the target station sends the setup response to the target access device, so that the target access device forwards the setup response to the source access device; and when receiving the setup response, determine the resource information of the direct link according to the source station resource and the capability information that are carried in the setup request and the target station resource and the capability information that are carried in the setup response. Optionally, the resource information acquiring module 404 is further configured to: when the source access device receives the setup request sent by the source station, send the setup request to the target access device, so that the target access device determines the resource information of the direct link according to the target station resource and the capability information and the source station resource and the capability information that are carried in the setup request, and forwards the setup request to the target station, where the target access device sends, to the source access device, the setup response that carries the resource information of the direct link; and when the source access device receives the setup response that carries the resource information of the direct link, acquire the resource information of the direct link.

Optionally, the sending module 403 is further configured to: when it is determined that the source access device does not have a coordination relationship with the target access device, send a quit request to the source station, so that when receiving the quit request, the source station quits setting up the direct link with the target station.

Optionally, the discovery response is received by the source station in preset duration that is after the discovery request is sent.

Optionally, the source station and the target station exchange information by using three links that are respectively between the source station and the source access device, the source access device and the target access device, and the target access device and the target station, to acquire a preset password between the two stations, and after setting up the direct link, the source station and the target station acquire a communication key according to the preset password, and communicate based on the communication key.

In conclusion, in this embodiment of the present invention, when a discovery request sent by a source station is received, if it is determined that a target station and the source station are associated with different access devices, a target access device associated with the target station is obtained by querying a preset database, and when it is determined that a source access device has a coordination relationship with the target access device, the source access device forwards the discovery request to the target access device, and initiates a process of setting up a direct link. In this way, two stations that are in different BSSs or are associated with different access devices can set up a direct link to perform communication, which greatly reduces a limitation on a process of setting up a direct link in the prior art, and enlarges an application scope.

It should be noted that, during link setup by the apparatus for setting up a link between WiFi system-based stations provided in the foregoing embodiment, division of the foregoing functional modules is merely used as an example for description. In practice, the foregoing functions may be allocated to different functional modules for implementation as required, that is, an internal structure of an access device is divided into different functional modules to implement all or a part of the functions described above. In addition, the apparatus for setting up a link between WiFi system-based stations provided in the foregoing embodiment and the method embodiment for setting up a link between WiFi system-based stations pertain to a same concept. For details of a specific implementation process, refer to the method embodiment, which are not described herein again.

FIG. 5 is an access device according to an embodiment of the present invention. Referring to FIG. 5, the access device includes: a receiver 501, a processor 502, a transmitter 503, and a memory 504, where the receiver 501, the transmitter 503, and the memory 504 are separately connected to the processor 502.

The receiver 501 is configured to receive, by a source access device, a discovery request sent by a source station, where the discovery request includes at least a source station identifier and a target station identifier.

The processor 502 is configured to query, when it is determined that a target station and the source station are associated with different access devices, a preset database according to the target station identifier, to obtain a target access device associated with the target station, where the preset database stores a correspondence between an access device and a station identifier and an access device that has a coordination relationship with the source access device.

The transmitter 503 is configured to: when it is determined, by querying the preset database, that the source access device has a coordination relationship with the target access device, forward, by the source access device, the discovery request to the target access device, so that the target access device sends the discovery request to the target station, where when the target station determines that a direct link can be set up, the target station sends a discovery response to the source station.

The processor 502 is further configured to determine, when the source access device receives a setup request sent by the source station and a setup response sent by the target station, resource information of the direct link according to a source station resource and capability information that are carried in the setup request and a target station resource and capability information that are carried in the setup response.

The transmitter 503 is further configured to send the resource information of the direct link to the source station and the target station, so that the source station and the target station set up the direct link according to the resource information of the direct link.

Optionally, the setup request is sent to the source access device by the source station when the source station determines, according to quality of the direct link, that communication quality of the direct link is better than that of a specified link, where the specified link is a communication link between the source access device and the source station.

Optionally, the transmitter 503 is further configured to: send, by the source access device, the resource information of the direct link to the source station; and send, by the source access device, the resource information of the direct link to the target access device, so that the target access device forwards the resource information of the direct link to the target station, so that the source station and the target station set up the direct link according to the resource information of the direct link.

Optionally, the processor 502 is further configured to: when the source access device receives the setup request sent by the source station, send the setup request to the target access device, so that the target access device forwards the setup request to the target station, and the target station sends the setup response to the target access device, so that the target access device forwards the setup response to the source access device; and when receiving the setup response, determine the resource information of the direct link by performing negotiation with the target access device, where the negotiation is performed according to the source station resource and the capability information that are carried in the setup request and the target station resource and the capability information that are carried in the setup response.

Optionally, the processor 502 is further configured to: when the source access device receives the setup request sent by the source station, send the setup request to the target access device, so that the target access device forwards the setup request to the target station, and the target station sends the setup response to the target access device, so that the target access device forwards the setup response to the source access device; and when receiving the setup response, determine the resource information of the direct link according to the source station resource and the capability information that are carried in the setup request and the target station resource and the capability information that are carried in the setup response.

Optionally, the processor 502 is further configured to: when the source access device receives the setup request sent by the source station, send the setup request to the target access device, so that the target access device determines the resource information of the direct link according to the target station resource and the capability information and the source station resource and the capability information that are carried in the setup request, and forwards the setup request to the target station, where the target access device sends, to the source access device, the setup response that carries the resource information of the direct link; and when the source access device receives the setup response that carries the resource information of the direct link, acquire the resource information of the direct link.

Optionally, the transmitter 503 is further configured to: when it is determined that the source access device does not have a coordination relationship with the target access device, send a quit request to the source station, so that when receiving the quit request, the source station quits setting up the direct link with the target station.

Optionally, the discovery response is received by the source station in preset duration that is after the discovery request is sent.

Optionally, the source station and the target station exchange information by using three links that are respectively between the source station and the source access device, the source access device and the target access device, and the target access device and the target station, to acquire a preset password between the two stations, and after setting up the direct link, the source station and the target station acquire a communication key according to the preset password, and communicate based on the communication key.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing description is merely an exemplary embodiment of the present invention, but is not intended to limit the present invention. Any modification, equivalent replacement, and improvement made without departing from the principle of the present invention shall fall within the protection scope of the present invention.

## Claims

1. A method for setting up a link between WiFi system-based stations, wherein the method comprises:
receiving (101), by a source access device, a discovery request sent by a source station, wherein the discovery request comprises at least a source station identifier and a target station identifier;
querying (102), by the source access device, when it is determined that a target station and the source station are associated with different access devices, a preset database stored in the access device according to the target station identifier, to obtain a target access device associated with the target station, wherein the preset database stores a correspondence between an access device and a station identifier and an access device that has a coordination relationship with the source access device, wherein the coordination relationship refers to that there is a coordination interface between two access devices, and the two access devices are configured to transmit information to each other by using the coordination interface;
when it is determined, by querying the preset database, that the source access device has a coordination relationship with the target access device, forwarding (103), by the source access device, the discovery request to the target access device, so that the target access device sends the discovery request to the target station, wherein when the target station determines that a direct link can be set up, the target station sends a discovery response to the source station;
acquiring (104), by the source access device, when the source access device receives a setup request sent by the source station and a setup response sent by the target station, resource information of the direct link according to a source station resource and capability information that are carried in the setup request and a target station resource and capability information that are carried in the setup response; and
sending (105), by the source access device, the resource information of the direct link to the source station and the target station, so that the source station and the target station set up the direct link according to the resource information of the direct link.

2. The method according to claim 1, wherein the setup request is sent to the source access device by the source station when the source station determines, according to quality of the direct link, that communication quality of the direct link is better than that of a specified link, wherein the specified link is a communication link between the source access device and the source station.

3. The method according to claim 1, wherein the sending (105) the resource information of the direct link to the source station and the target station, so that the source station and the target station set up the direct link according to the resource information of the direct link comprises:
sending, by the source access device, the resource information of the direct link to the source station; and
sending, by the source access device, the resource information of the direct link to the target access device, so that the target access device forwards the resource information of the direct link to the target station, so that the source station and the target station set up the direct link according to the resource information of the direct link.

4. The method according to claim 1, wherein the acquiring (104), when the source access device receives a setup request sent by the source station and a setup response sent by the target station, resource information of the direct link according to a source station resource and capability information that are carried in the setup request and a target station resource and capability information that are carried in the setup response comprises:
when the source access device receives the setup request sent by the source station, sending the setup request to the target access device, so that the target access device forwards the setup request to the target station, and the target station sends the setup response to the target access device, so that the target access device forwards the setup response to the source access device; and
when receiving the setup response, determining the resource information of the direct link by performing negotiation with the target access device, wherein the negotiation is performed according to the source station resource and the capability information that are carried in the setup request and the target station resource and the capability information that are carried in the setup response.

5. The method according to claim 1, wherein the acquiring (104), when the source access device receives a setup request sent by the source station and a setup response sent by the target station, resource information of the direct link according to a source station resource and capability information that are carried in the setup request and a target station resource and capability information that are carried in the setup response comprises:
when the source access device receives the setup request sent by the source station, sending the setup request to the target access device, so that the target access device forwards the setup request to the target station, and the target station sends the setup response to the target access device, so that the target access device forwards the setup response to the source access device; and
when receiving the setup response, determining the resource information of the direct link according to the source station resource and the capability information that are carried in the setup request and the target station resource and the capability information that are carried in the setup response.

6. The method according to claim 1, wherein the acquiring (104), when the source access device receives a setup request sent by the source station and a setup response sent by the target station, resource information of the direct link according to a source station resource and capability information that are carried in the setup request and a target station resource and capability information that are carried in the setup response comprises:
when the source access device receives the setup request sent by the source station, sending the setup request to the target access device, so that the target access device determines the resource information of the direct link according to the target station resource and the capability information and the source station resource and the capability information that are carried in the setup request, and forwards the setup request to the target station, wherein the target access device sends, to the source access device, the setup response that carries the resource information of the direct link; and
when the source access device receives the setup response that carries the resource information of the direct link, acquiring the resource information of the direct link.

7. The method according to claim 1, wherein after the querying (102), when it is determined that a target station and the source station are associated with different access devices, a preset database according to the target station identifier, to obtain a target access device associated with the target station, the method further comprises:
when it is determined that the source access device does not have a coordination relationship with the target access device, sending a quit request to the source station, so that when receiving the quit request, the source station quits setting up the direct link with the target station.

8. The method according to claim 1, wherein the discovery response is received by the source station in preset duration that is after the discovery request is sent.

9. The method according to any one of claims 1 to 8, wherein the source station and the target station exchange information by using three links that are respectively between the source station and the source access device, the source access device and the target access device, and the target access device and the target station, to acquire a preset password between the two stations, and after setting up the direct link, the source station and the target station acquire a communication key according to the preset password, and communicate based on the communication key.

10. A source access device for setting up a link between WiFi system-based stations, wherein the source access device comprises:
a receiving module (401), configured to receive a discovery request sent by a source station, wherein the discovery request comprises at least a source station identifier and a target station identifier;
a query module (402), configured to query, when it is determined that a target station and the source station are associated with different access devices, a preset database according to the target station identifier, to obtain a target access device associated with the target station, wherein the preset database stores a correspondence between an access device and a station identifier and an access device that has a coordination relationship with the source access device;
a sending module (403), configured to: when it is determined, by querying the preset database, that the source access device has a coordination relationship with the target access device, forward the discovery request to the target access device, so that the target access device sends the discovery request to the target station, wherein when the target station determines that a direct link can be set up, the target station sends a discovery response to the source station; and
a resource information acquiring module (404), configured to acquire, when the source access device receives a setup request sent by the source station and a setup response sent by the target station, resource information of the direct link according to a source station resource and capability information that are carried in the setup request and a target station resource and capability information that are carried in the setup response; wherein
the sending module (403) is further configured to send the resource information of the direct link to the source station and the target station, so that the source station and the target station set up the direct link according to the resource information of the direct link.

11. The source access device according to claim 10, wherein the setup request is sent to the source access device by the source station when the source station determines, according to quality of the direct link, that communication quality of the direct link is better than that of a specified link, wherein the specified link is a communication link between the source access device and the source station.

12. The source access device according to claim 10, wherein the sending module (403) is further configured to: send the resource information of the direct link to the source station; and send the resource information of the direct link to the target access device, so that the target access device forwards the resource information of the direct link to the target station, so that the source station and the target station set up the direct link according to the resource information of the direct link.

13. The source access device according to claim 10, wherein the resource information acquiring module (404) is further configured to: when the source access device receives the setup request sent by the source station, send the setup request to the target access device, so that the target access device forwards the setup request to the target station, and the target station sends the setup response to the target access device, so that the target access device forwards the setup response to the source access device; and when receiving the setup response, determine the resource information of the direct link by performing negotiation with the target access device, wherein the negotiation is performed according to the source station resource and the capability information that are carried in the setup request and the target station resource and the capability information that are carried in the setup response.

14. The source access device according to claim 10, wherein the resource information acquiring module (404) is further configured to: when the source access device receives the setup request sent by the source station, send the setup request to the target access device, so that the target access device forwards the setup request to the target station, and the target station sends the setup response to the target access device, so that the target access device forwards the setup response to the source access device; and when receiving the setup response, determine the resource information of the direct link according to the source station resource and the capability information that are carried in the setup request and the target station resource and the capability information that are carried in the setup response.

15. The source access device according to claim 10, wherein the resource information acquiring module (404) is further configured to: when the source access device receives the setup request sent by the source station, send the setup request to the target access device, so that the target access device determines the resource information of the direct link according to the target station resource and the capability information and the source station resource and the capability information that are carried in the setup request, and forwards the setup request to the target station, wherein the target access device sends, to the source access device, the setup response that carries the resource information of the direct link; and when the source access device receives the setup response that carries the resource information of the direct link, acquire the resource information of the direct link.

16. The source access device according to claim 10, wherein the sending module (403) is further configured to: when it is determined that the source access device does not have a coordination relationship with the target access device, send a quit request to the source station, so that when receiving the quit request, the source station quits setting up the direct link with the target station.

17. The source access device according to claim 10, wherein the discovery response is received by the source station in preset duration that is after the discovery request is sent.

18. The source access device according to any one of claims 10 to 17, wherein the source station and the target station exchange information by using three links that are respectively between the source station and the source access device, the source access device and the target access device, and the target access device and the target station, so as to acquire a preset password between the two stations, and after setting up the direct link, the source station and the target station acquire a communication key according to the preset password, and communicate based on the communication key.

## Patentansprüche

1. Verfahren zum Aufbauen einer Verbindung zwischen auf dem WiFi-System basierenden Stationen, wobei das Verfahren Folgendes umfasst:
Empfangen (101) einer durch eine Quellenstation gesendeten Entdeckungsanforderung durch eine Quellenzugangsvorrichtung, wobei die Entdeckungsanforderung mindestens eine Quellenstationskennung und eine Zielstationskennung umfasst;
wenn bestimmt wird, dass eine Zielstation und die Quellenstation verschiedenen Zugangsvorrichtungen zugeordnet sind, Abfragen (102) einer in der Zugangsvorrichtung gespeicherten voreingestellten Datenbank durch die Quellenzugangsvorrichtung gemäß der Zielstationskennung, um eine der Zielstation zugeordnete Zielzugangsvorrichtung zu erhalten, wobei die voreingestellte Datenbank eine Korrespondenz zwischen einer Zugangsvorrichtung und einer Stationskennung und einer Zugangsvorrichtung, die eine Koordinationsbeziehung mit der Quellenzugangsvorrichtung aufweist, speichert, wobei sich die Koordinationsbeziehung darauf bezieht, dass eine Koordinationsschnittstelle zwischen zwei Zugangsvorrichtungen besteht, und die zwei Zugangsvorrichtungen dafür ausgelegt sind, durch Verwendung der Koordinationsschnittstelle Informationen zueinander zu senden;
wenn durch Abfragen der voreingestellten Datenbank bestimmt wird, dass die Quellenzugangsvorrichtung eine Koordinationsbeziehung mit der Zielzugangsvorrichtung aufweist, Weiterleiten (103) der Entdeckungsanforderung zu der Zielzugangsvorrichtung durch die Quellenzugangsvorrichtung, so dass die Zielzugangsvorrichtung die Entdeckungsanforderung zu der Zielstation sendet, wobei, wenn die Zielstation bestimmt, dass eine direkte Verbindung aufgebaut werden kann, die Zielstation eine Entdeckungsantwort zu der Quellenstation sendet;
wenn die Quellenzugangsvorrichtung eine durch die Quellenstation gesendete Aufbauanforderung und eine durch die Zielstation gesendete Aufbauantwort empfängt, Beschaffen (104) von Ressourceninformationen der direkten Verbindung durch die Quellenzugangsvorrichtung gemäß einer Quellenstationsressource und Fähigkeitsinformationen, die in der Aufbauanforderung geführt werden, und einer Zielstationsressource und Fähigkeitsinformationen, die in der Aufbauantwort geführt werden; und
Senden (105) der Ressourceninformationen der direkten Verbindung zu der Quellenstation und der Zielstation durch die Quellenzugangsvorrichtung, so dass die Quellenstation und die Zielstation die direkte Verbindung gemäß den Ressourceninformationen der direkten Verbindung aufbauen.

2. Verfahren nach Anspruch 1, wobei die Aufbauanforderung durch die Quellenstation zu der Quellenzugangsvorrichtung gesendet wird, wenn die Quellenstation gemäß der Qualität der direkten Verbindung bestimmt, dass Kommunikationsqualität der direkten Verbindung besser als die einer spezifizierten Verbindung ist, wobei die spezifizierte Verbindung eine Kommunikationsverbindung zwischen der Quellenzugangsvorrichtung und der Quellenstation ist.

3. Verfahren nach Anspruch 1, wobei das Senden (105) der Ressourceninformationen der direkten Verbindung zu der Quellenstation und der Zielstation, so dass die Quellenstation und die Zielstation die direkte Verbindung gemäß den Ressourceninformationen der direkten Verbindung aufbauen, Folgendes umfasst:
Senden der Ressourceninformationen der direkten Verbindung zu der Quellenstation durch die Quellenzugangsvorrichtung; und
Senden der Ressourceninformationen der direkten Verbindung zu der Zielzugangsvorrichtung durch die Quellenzugangsvorrichtung, so dass die Zielzugangsvorrichtung die Ressourceninformationen der direkten Verbindung zu der Zielstation weiterleitet, so dass die Quellenstation und die Zielstation die direkte Verbindung gemäß den Ressourceninformationen der direkten Verbindung aufbauen.

4. Verfahren nach Anspruch 1, wobei, wenn die Quellenzugangsvorrichtung eine durch die Quellenstation gesendete Aufbauanforderung und eine durch die Zielstation gesendete Aufbauantwort empfängt, das Beschaffen (104) von Ressourceninformationen der direkten Verbindung gemäß einer Quellenstationsressource und Fähigkeitsinformationen, die in der Aufbauanforderung geführt werden, und einer Zielstationsressource und Fähigkeitsinformationen, die in der Aufbauantwort geführt werden, Folgendes umfasst:
wenn die Quellenzugangsvorrichtung die durch die Quellenstation gesendete Aufbauanforderung empfängt, Senden der Aufbauanforderung zu der Zielzugangsvorrichtung, so dass die Zielzugangsvorrichtung die Aufbauanforderung zu der Zielstation weiterleitet und die Zielstation die Aufbauantwort zu der Zielzugangsvorrichtung sendet, so dass die Zielzugangsvorrichtung die Aufbauantwort zu der Quellenzugangsvorrichtung weiterleitet; und
Bestimmen der Ressourceninformationen der direkten Verbindung, wenn die Aufbauantwort empfangen wird, durch Durchführen von Verhandlung mit der Zielzugangsvorrichtung, wobei die Verhandlung gemäß der Quellenstationsressource und den Fähigkeitsinformationen, die in der Aufbauanforderung geführt werden, und
der Zielstationsressource und den Fähigkeitsinformationen, die in der Aufbauantwort geführt werden, durchgeführt wird.

5. Verfahren nach Anspruch 1, wobei, wenn die Quellenzugangsvorrichtung eine durch die Quellenstation gesendete Aufbauanforderung und eine durch die Zielstation gesendete Aufbauantwort empfängt, das Beschaffen (104) von Ressourceninformationen der direkten Verbindung gemäß einer Quellenstationsressource und Fähigkeitsinformationen, die in der Aufbauanforderung geführt werden, und einer Zielstationsressource und Fähigkeitsinformationen, die in der Aufbauantwort geführt werden, Folgendes umfasst:
wenn die Quellenzugangsvorrichtung die durch die Quellenstation gesendete Aufbauanforderung empfängt, Senden der Aufbauanforderung zu der Zielzugangsvorrichtung, so dass die Zielzugangsvorrichtung die Aufbauanforderung zu der Zielstation weiterleitet und die Zielstation die Aufbauantwort zu der Zielzugangsvorrichtung sendet, so dass die Zielzugangsvorrichtung die Aufbauantwort zu der Quellenzugangsvorrichtung weiterleitet; und
wenn die Aufbauantwort empfangen wird, Bestimmen der Ressourceninformationen der direkten Verbindung gemäß der Quellenstationsressource und den Fähigkeitsinformationen, die in der Aufbauanforderung geführt werden, und der Zielstationsressource und den Fähigkeitsinformationen, die in der Aufbauantwort geführt werden.

6. Verfahren nach Anspruch 1, wobei, wenn die Quellenzugangsvorrichtung eine durch die Quellenstation gesendete Aufbauanforderung und eine durch die Zielstation gesendete Aufbauantwort empfängt, das Beschaffen (104) von Ressourceninformationen der direkten Verbindung gemäß einer Quellenstationsressource und Fähigkeitsinformationen, die in der Aufbauanforderung geführt werden, und einer Zielstationsressource und Fähigkeitsinformationen, die in der Aufbauantwort geführt werden, Folgendes umfasst:
wenn die Quellenzugangsvorrichtung die durch die Quellenstation gesendete Aufbauanforderung empfängt, Senden der Aufbauanforderung zu der Zielzugangsvorrichtung, so dass die Zielzugangsvorrichtung die Ressourceninformationen der direkten Verbindung gemäß der Zielstationsressource und den Fähigkeitsinformationen und der Quellenstationsressource und den Fähigkeitsinformationen, die in der Aufbauanforderung geführt werden, bestimmt und die Aufbauanforderung zu der Zielstation weiterleitet, wobei die Zielzugangsvorrichtung die Aufbauantwort, die die Ressourceninformationen der direkten Verbindung führt, zu der Quellenzugangsvorrichtung sendet; und
wenn die Quellenzugangsvorrichtung die Aufbauantwort empfängt, die die Ressourceninformationen der direkten Verbindung führt, Beschaffen der Ressourceninformationen der direkten Verbindung.

7. Verfahren nach Anspruch 1, wobei das Verfahren nach dem Abfragen (102), wenn bestimmt wird, dass eine Zielstation und die Quellenstation verschiedenen Zugangsvorrichtungen zugeordnet sind, einer voreingestellten Datenbank gemäß der Zielstationskennung, um eine Zielzugangsvorrichtung zu erhalten, die der Zielstation zugeordnet ist, ferner Folgendes umfasst:
wenn bestimmt wird, dass die Quellenzugangsvorrichtung keine Koordinationsbeziehung mit der Zielzugangsvorrichtung aufweist, Senden einer Abbruchanforderung zu der Quellenstation, so dass, wenn die Abbruchanforderung empfangen wird, die Quellenstation das Aufbauen der direkten Verbindung mit der Zielstation abbricht.

8. Verfahren nach Anspruch 1, wobei die Entdeckungsantwort durch die Quellenstation in voreingestellter Dauer empfangen wird, die nach dem Senden der Entdeckungsanforderung ist.

9. Verfahren nach einem der Ansprüche 1 bis 8, wobei die Quellenstation und die Zielstation durch Verwendung von drei Verbindungen, die jeweils zwischen der Quellenstation und der Quellenzugangsvorrichtung, der Quellenzugangsvorrichtung und der Zielzugangsvorrichtung und der Zielzugangsvorrichtung und der Zielstation bestehen, Informationen austauschen, um ein voreingestelltes Passwort zwischen den zwei Stationen zu beschaffen, und nach dem Aufbauen der direkten Verbindung die Quellenstation und die Zielstation gemäß dem voreingestellten Passwort einen Kommunikationsschlüssel beschaffen und auf der Basis des Kommunikationsschlüssels kommunizieren.

10. Quellenzugangsvorrichtung zum Aufbauen einer Verbindung zwischen auf dem WiFi-System basierenden Stationen, wobei die Quellenzugangsvorrichtung Folgendes umfasst:
ein Empfangsmodul (401), ausgelegt zum Empfangen einer durch eine Quellenstation gesendeten Entdeckungsanforderung, wobei die Entdeckungsanforderung mindestens eine Quellenstationskennung und eine Zielstationskennung umfasst;
ein Abfragemodul (402), ausgelegt zum Abfragen, wenn bestimmt wird, dass eine Zielstation und die Quellenstation verschiedenen Zugangsvorrichtungen zugeordnet sind, einer voreingestellten Datenbank gemäß der Zielstationskennung, um eine Zielzugangsvorrichtung zu erhalten, die der Zielstation zugeordnet ist, wobei die voreingestellte Datenbank eine Korrespondenz zwischen einer Zugangsvorrichtung und einer Stationskennung und einer Zugangsvorrichtung, die eine Koordinationsbeziehung mit der Quellenzugangsvorrichtung aufweist, speichert;
ein Sendemodul (403), das für Folgendes ausgelegt ist: wenn durch Abfragen der voreingestellten Datenbank bestimmt wird, dass die Quellenzugangsvorrichtung eine Koordinationsbeziehung mit der Zielzugangsvorrichtung aufweist, Weiterleiten der Entdeckungsanforderung zu der Zielzugangsvorrichtung, so dass die Zielzugangsvorrichtung die Entdeckungsanforderung zu der Zielstation sendet, wobei, wenn die Zielstation bestimmt, dass eine direkte Verbindung aufgebaut werden kann, die Zielstation eine Entdeckungsantwort zu der Quellenstation sendet; und
ein Ressourceninformations-Beschaffungsmodul (404), ausgelegt zum Beschaffen, wenn die Quellenzugangsvorrichtung eine durch die Quellenstation gesendete Aufbauanforderung und eine durch die Zielstation gesendete Aufbauantwort empfängt, von Ressourceninformationen der direkten Verbindung gemäß einer Quellenstationsressource und Fähigkeitsinformationen, die in der Aufbauanforderung geführt werden, und einer Zielstationsressource und Fähigkeitsinformationen, die in der Aufbauantwort geführt werden; wobei
das Sendemodul (403) ferner ausgelegt ist zum Senden der Ressourceninformationen der direkten Verbindung zu der Quellenstation und der Zielstation, so dass die Quellenstation und die Zielstation die direkte Verbindung gemäß den Ressourceninformationen der direkten Verbindung aufbauen.

11. Quellenzugangsvorrichtung nach Anspruch 10, wobei die Aufbauanforderung durch die Quellenstation zu der Quellenzugangsvorrichtung gesendet wird, wenn die Quellenstation gemäß einer Qualität der direkten Verbindung bestimmt, dass Kommunikationsqualität der direkten Verbindung besser als die einer spezifizierten Verbindung ist, wobei die spezifizierte Verbindung eine Kommunikationsverbindung zwischen der Quellenzugangsvorrichtung und der Quellenstation ist.

12. Quellenzugangsvorrichtung nach Anspruch 10, wobei das Sendemodul (403) ferner für Folgendes ausgelegt ist: Senden der Ressourceninformationen der direkten Verbindung zu der Quellenstation; und Senden der Ressourceninformationen der direkten Verbindung zu der Zielzugangsvorrichtung, so dass die Zielzugangsvorrichtung die Ressourceninformationen der direkten Verbindung zu der Zielstation weiterleitet, so dass die Quellenstation und die Zielstation die direkte Verbindung gemäß den Ressourceninformationen der direkten Verbindung aufbauen.

13. Quellenzugangsvorrichtung nach Anspruch 10, wobei das Ressourceninformations-Beschaffungsmodul (404) ferner für Folgendes ausgelegt ist: wenn die Quellenzugangsvorrichtung die durch die Quellenstation gesendete Aufbauanforderung empfängt, Senden der Aufbauanforderung zu der Zielzugangsvorrichtung, so dass die Zielzugangsvorrichtung die Aufbauanforderung zu der Zielstation weiterleitet und die Zielstation die Aufbauantwort zu der Zielzugangsvorrichtung sendet, so dass die Zielzugangsvorrichtung die Aufbauantwort zu der Quellenzugangsvorrichtung weiterleitet; und Bestimmen der Ressourceninformationen der direkten Verbindung, wenn die Aufbauantwort empfangen wird, durch Durchführen von Verhandlung mit der Zielzugangsvorrichtung, wobei die Verhandlung gemäß der Quellenstationsressource und den Fähigkeitsinformationen, die in der Aufbauanforderung geführt werden, und der Zielstationsressource und den Fähigkeitsinformationen, die in der Aufbauantwort geführt werden, durchgeführt wird.

14. Quellenzugangsvorrichtung nach Anspruch 10, wobei das Ressourceninformations-Beschaffungsmodul (404) ferner für Folgendes ausgelegt ist: wenn die Quellenzugangsvorrichtung die durch die Quellenstation gesendete Aufbauanforderung empfängt, Senden der Aufbauanforderung zu der Zielzugangsvorrichtung, so dass die Zielzugangsvorrichtung die Aufbauanforderung zu der Zielstation weiterleitet und die Zielstation die Aufbauantwort zu der Zielzugangsvorrichtung sendet, so dass die Zielzugangsvorrichtung die Aufbauantwort zu der Quellenzugangsvorrichtung weiterleitet; und wenn die Aufbauantwort empfangen wird, Bestimmen der Ressourceninformationen der direkten Verbindung gemäß der Quellenstationsressource und den Fähigkeitsinformationen, die in der Aufbauanforderung geführt werden, und der Zielstationsressource und den Fähigkeitsinformationen, die in der Aufbauantwort geführt werden.

15. Quellenzugangsvorrichtung nach Anspruch 10, wobei das Ressourceninformations-Beschaffungsmodul (404) ferner für Folgendes ausgelegt ist: wenn die Quellenzugangsvorrichtung die durch die Quellenstation gesendete Aufbauanforderung empfängt, Senden der Aufbauanforderung zu der Zielzugangsvorrichtung, so dass die Zielzugangsvorrichtung die Ressourceninformationen der direkten Verbindung gemäß der Zielstationsressource und den Fähigkeitsinformationen und der Quellenstationsressource und den Fähigkeitsinformationen, die in der Aufbauanforderung geführt werden, bestimmt und die Aufbauanforderung zu der Zielstation weiterleitet, wobei die Zielzugangsvorrichtung die Aufbauantwort, die die Ressourceninformationen der direkten Verbindung führt, zu der Quellenzugangsvorrichtung sendet; und wenn die Quellenzugangsvorrichtung die Aufbauantwort empfängt, die die Ressourceninformationen der direkten Verbindung führt, Beschaffen der Ressourceninformationen der direkten Verbindung.

16. Quellenzugangsvorrichtung nach Anspruch 10, wobei das Sendemodul (403) ferner für Folgendes ausgelegt ist: wenn bestimmt wird, dass die Quellenzugangsvorrichtung keine Koordinationsbeziehung mit der Zielzugangsvorrichtung aufweist, Senden einer Abbruchanforderung zu der Quellenstation, so dass, wenn die Abbruchanforderung empfangen wird, die Quellenstation das Aufbauen der direkten Verbindung mit der Zielstation abbricht.

17. Quellenzugangsvorrichtung nach Anspruch 10, wobei die Entdeckungsantwort durch die Quellenstation in voreingestellter Dauer empfangen wird, die nach dem Senden der Entdeckungsanforderung ist.

18. Quellenzugangsvorrichtung nach einem der Ansprüche 10 bis 17, wobei die Quellenstation und die Zielstation durch Verwendung von drei Verbindungen, die jeweils zwischen der Quellenstation und der Quellenzugangsvorrichtung, der Quellenzugangsvorrichtung und der Zielzugangsvorrichtung und der Zielzugangsvorrichtung und der Zielstation bestehen, Informationen austauschen, um ein voreingestelltes Passwort zwischen den zwei Stationen zu beschaffen, und nach dem Aufbauen der direkten Verbindung die Quellenstation und die Zielstation gemäß dem voreingestellten Passwort einen Kommunikationsschlüssel beschaffen und auf der Basis des Kommunikationsschlüssels kommunizieren.

## Revendications

1. Procédé d'établissement d'une liaison entre des stations reposant sur un système WiFi, le procédé comprenant les étapes suivantes :
réception (101), par un dispositif d'accès source, d'une requête de découverte envoyée par une station source, la requête de découverte comprenant au moins un identifiant de station de source et un identifiant de station cible ;
interrogation (102), par le dispositif d'accès source, lorsqu'il est déterminé qu'une station cible et la station source sont associées à des dispositifs d'accès différents, d'une base de données préétablie stockée dans le dispositif d'accès selon l'identifiant de station cible, aux fins d'obtenir un dispositif d'accès cible associé à la station cible, la base de données préétablie stockant une correspondance entre un dispositif d'accès et un identifiant de station et un dispositif d'accès qui entretient une relation de coordination avec le dispositif d'accès source, la relation de coordination faisant référence au fait qu'il existe une interface de coordination entre deux dispositifs d'accès et au fait que les deux dispositifs d'accès sont configurés pour transmettre des informations l'un à l'autre au moyen de l'interface de coordination ;
lorsqu'il est déterminé, par interrogation de la base de données préétablie, que le dispositif d'accès source entretient une relation de coordination avec le dispositif d'accès cible, retransmission (103), par le dispositif d'accès source, de la requête de découverte au dispositif d'accès cible, de sorte que le dispositif d'accès cible envoie la requête de découverte à la station cible, le station cible envoyant une réponse de découverte à la station source lorsque la station cible détermine qu'une liaison directe peut être établie ;
obtention (104), par le dispositif d'accès source, lorsque le dispositif d'accès source reçoit une requête d'établissement envoyée par la station source et une réponse d'établissement envoyée par la station cible, d'informations de ressource relatives à la liaison directe selon une ressource de station source et des informations de capacité véhiculées dans la requête d'établissement et une ressource de station cible et des informations de capacité véhiculées dans la réponse d'établissement ; et
envoi (105), par le dispositif d'accès source, des informations de ressource relatives à la liaison directe à la station source et la station cible, de sorte que la station source et la station cible établissent la liaison directe selon les informations de ressource relatives à la liaison directe.

2. Procédé selon la revendication 1, dans lequel la requête d'établissement est envoyée au dispositif d'accès source par la station source lorsque la station source détermine, selon une qualité de la liaison directe, qu'une qualité de communication de la liaison directe est meilleure que celle d'une liaison spécifiée, la liaison spécifiée étant une liaison de communication entre le dispositif d'accès source et la station source.

3. Procédé selon la revendication 1, dans lequel l'étape d'envoi (105) des informations de ressource relatives à la liaison directe à la station source et la station cible, de sorte que la station source et la station cible établissent la liaison directe selon les informations de ressource relatives à la liaison directe comprend les étapes suivantes :
envoi, par le dispositif d'accès source, des informations de ressource relatives à la liaison directe à la station source ; et
envoi, par le dispositif d'accès source, des informations de ressource relatives à la liaison directe au dispositif d'accès cible, de sorte que le dispositif d'accès cible retransmette les informations de ressource relatives à la liaison directe à la station cible, de sorte que la station source et la station cible établissent la liaison directe selon les informations de ressource relatives à la liaison directe.

4. Procédé selon la revendication 1, dans lequel l'étape d'obtention (104), lorsque le dispositif d'accès source reçoit une requête d'établissement envoyée par la station source et une réponse d'établissement envoyée par la station cible, d'informations de ressource relatives à la liaison directe selon une ressource de station source et des informations de capacité véhiculées dans la requête d'établissement et une ressource de station cible et des informations de capacité véhiculées dans la réponse d'établissement comprend les étapes suivantes :
lorsque le dispositif d'accès source reçoit la requête d'établissement envoyée par la station source, envoi de la requête d'établissement au dispositif d'accès cible, de sorte que le dispositif d'accès cible retransmette la requête d'établissement à la station cible et que la station cible envoie la réponse d'établissement au dispositif d'accès cible, de sorte que le dispositif d'accès cible retransmette la réponse d'établissement au dispositif d'accès source ; et
lors de la réception de la réponse d'établissement, détermination des informations de ressource relatives à la liaison directe par engagement d'une négociation avec le dispositif d'accès cible, la négociation étant engagée selon la ressource de station source et les informations de capacité véhiculées dans la requête d'établissement et la ressource de station cible et les informations de capacité véhiculées dans la réponse d'établissement.

5. Procédé selon la revendication 1, dans lequel l'étape d'obtention (104), lorsque le dispositif d'accès source reçoit une requête d'établissement envoyée par la station source et une réponse d'établissement envoyée par la station cible, d'informations de ressource relatives à la liaison directe selon une ressource de station source et des informations de capacité véhiculées dans la requête d'établissement et une ressource de station cible et des informations de capacité véhiculées dans la réponse d'établissement comprend les étapes suivantes :
lorsque le dispositif d'accès source reçoit la requête d'établissement envoyée par la station source, envoi de la requête d'établissement au dispositif d'accès cible, de sorte que le dispositif d'accès cible retransmette la requête d'établissement à la station cible et que la station cible envoie la réponse d'établissement au dispositif d'accès cible, de sorte que le dispositif d'accès cible retransmette la réponse d'établissement au dispositif d'accès source ; et
lors de la réception de la réponse d'établissement, détermination des informations de ressource relatives à la liaison directe selon la ressource de station source et les informations de capacité véhiculées dans la requête d'établissement et la ressource de station cible et les informations de capacité véhiculées dans la réponse d'établissement.

6. Procédé selon la revendication 1, dans lequel l'étape d'obtention (104), lorsque le dispositif d'accès source reçoit une requête d'établissement envoyée par la station source et une réponse d'établissement envoyée par la station cible, d'informations de ressource relatives à la liaison directe selon une ressource de station source et des informations de capacité véhiculées dans la requête d'établissement et une ressource de station cible et des informations de capacité véhiculées dans la réponse d'établissement comprend les étapes suivantes :
lorsque le dispositif d'accès source reçoit la requête d'établissement envoyée par la station source, envoi de la requête d'établissement au dispositif d'accès cible, de sorte que le dispositif d'accès cible détermine les informations de ressource relatives à la liaison directe selon la ressource de station cible et les informations de capacité et la ressource de station source et les informations de capacité véhiculées dans la requête d'établissement et retransmette la requête d'établissement à la station cible, le dispositif d'accès cible envoyant, au dispositif d'accès source, la réponse d'établissement qui véhicule les informations de ressource relatives à la liaison directe ; et
lorsque le dispositif d'accès source reçoit la réponse d'établissement qui véhicule les informations de ressource relatives à la liaison directe, obtention des informations de ressource relatives à la liaison directe.

7. Procédé selon la revendication 1, le procédé comprenant en outre, suite à l'étape d'interrogation (102), lorsqu'il est déterminé qu'une station cible et la station source sont associées à des dispositifs d'accès différents, d'une base de données préétablie selon l'identifiant de station cible, aux fins d'obtenir un dispositif d'accès cible associé à la station cible, l'étape suivante :
lorsqu'il est déterminé que le dispositif d'accès source n'entretient pas une relation de coordination avec le dispositif d'accès cible, envoi d'une requête d'abandon à la station source, de sorte que, lorsqu'elle reçoit la requête d'abandon, la station source abandonne l'établissement de la liaison directe avec la station cible.

8. Procédé selon la revendication 1, dans lequel la réponse de découverte est reçue par la station source dans une durée préétablie suivant l'envoi de la requête de découverte.

9. Procédé selon l'une quelconque des revendications 1 à 8, dans lequel la station source et la station cible échangent des informations à l'aide de trois liaisons respectivement entre la station source et le dispositif d'accès source, entre le dispositif d'accès source et le dispositif d'accès cible et entre le dispositif d'accès cible et la station cible, aux fins d'obtenir un mot de passe préétabli entre les deux stations et, suite à l'établissement de la liaison directe, la station source et la station cible obtiennent une clé de communication selon le mot de passe préétabli et communiquent sur la base de la clé de communication.

10. Dispositif d'accès source pour l'établissement d'une liaison entre des stations reposant sur un système WiFi, le dispositif d'accès source comprenant :
un module de réception (401), configuré pour recevoir une requête de découverte envoyée par une station source, la requête de découverte comprenant au moins un identifiant de station de source et un identifiant de station cible ;
un module d'interrogation (402), configuré pour interroger, lorsqu'il est déterminé qu'une station cible et la station source sont associées à des dispositifs d'accès différents, une base de données préétablie selon l'identifiant de station cible, aux fins d'obtenir un dispositif d'accès cible associé à la station cible, la base de données préétablie stockant une correspondance entre un dispositif d'accès et un identifiant de station et un dispositif d'accès qui entretient une relation de coordination avec le dispositif d'accès source ;
un module d'envoi (403), configuré pour : lorsqu'il est déterminé, par interrogation de la base de données préétablie, que le dispositif d'accès source entretient une relation de coordination avec le dispositif d'accès cible, retransmettre la requête de découverte au dispositif d'accès cible, de sorte que le dispositif d'accès cible envoie la requête de découverte à la station cible, le station cible envoyant une réponse de découverte à la station source lorsque la station cible détermine qu'une liaison directe peut être établie ; et
un module d'obtention d'informations de ressource (404), configuré pour obtenir, lorsque le dispositif d'accès source reçoit une requête d'établissement envoyée par la station source et une réponse d'établissement envoyée par la station cible, des informations de ressource relatives à la liaison directe selon une ressource de station source et des informations de capacité véhiculées dans la requête d'établissement et une ressource de station cible et des informations de capacité véhiculées dans la réponse d'établissement ;
le module d'envoi (403) étant configuré en outre pour envoyer les informations de ressource relatives à la liaison directe à la station source et la station cible, de sorte que la station source et la station cible établissent la liaison directe selon les informations de ressource relatives à la liaison directe.

11. Dispositif d'accès source selon la revendication 10, dans lequel la requête d'établissement est envoyée au dispositif d'accès source par la station source lorsque la station source détermine, selon une qualité de la liaison directe, qu'une qualité de communication de la liaison directe est meilleure que celle d'une liaison spécifiée, la liaison spécifiée étant une liaison de communication entre le dispositif d'accès source et la station source.

12. Dispositif d'accès source selon la revendication 10, dans lequel le module d'envoi (403) est configuré en outre pour : envoyer les informations de ressource relatives à la liaison directe à la station source ; et envoyer les informations de ressource relatives à la liaison directe au dispositif d'accès cible, de sorte que le dispositif d'accès cible retransmette les informations de ressource relatives à la liaison directe à la station cible, de sorte que la station source et la station cible établissent la liaison directe selon les informations de ressource relatives à la liaison directe.

13. Dispositif d'accès source selon la revendication 10, dans lequel le module d'obtention d'informations de ressource (404) est configuré en outre pour : lorsque le dispositif d'accès source reçoit la requête d'établissement envoyée par la station source, envoyer la requête d'établissement au dispositif d'accès cible, de sorte que le dispositif d'accès cible retransmette la requête d'établissement à la station cible et que la station cible envoie la réponse d'établissement au dispositif d'accès cible, de sorte que le dispositif d'accès cible retransmette la réponse d'établissement au dispositif d'accès source ; et, lors de la réception de la réponse d'établissement, déterminer les informations de ressource relatives à la liaison directe par engagement d'une négociation avec le dispositif d'accès cible, la négociation étant engagée selon la ressource de station source et les informations de capacité véhiculées dans la requête d'établissement et la ressource de station cible et les informations de capacité véhiculées dans la réponse d'établissement.

14. Dispositif d'accès source selon la revendication 10, dans lequel le module d'obtention d'informations de ressource (404) est configuré en outre pour : lorsque le dispositif d'accès source reçoit la requête d'établissement envoyée par la station source, envoyer la requête d'établissement au dispositif d'accès cible, de sorte que le dispositif d'accès cible retransmette la requête d'établissement à la station cible et que la station cible envoie la réponse d'établissement au dispositif d'accès cible, de sorte que le dispositif d'accès cible retransmette la réponse d'établissement au dispositif d'accès source ; et, lors de la réception de la réponse d'établissement, déterminer les informations de ressource relatives à la liaison directe selon la ressource de station source et les informations de capacité véhiculées dans la requête d'établissement et la ressource de station cible et les informations de capacité véhiculées dans la réponse d'établissement.

15. Dispositif d'accès source selon la revendication 10, dans lequel le module d'obtention d'informations de ressource (404) est configuré en outre pour : lorsque le dispositif d'accès source reçoit la requête d'établissement envoyée par la station source, envoyer la requête d'établissement au dispositif d'accès cible, de sorte que le dispositif d'accès cible détermine les informations de ressource relatives à la liaison directe selon la ressource de station cible et les informations de capacité et la ressource de station source et les informations de capacité véhiculées dans la requête d'établissement et retransmette la requête d'établissement à la station cible, le dispositif d'accès cible envoyant, au dispositif d'accès source, la réponse d'établissement qui véhicule les informations de ressource relatives à la liaison directe ; et, lorsque le dispositif d'accès source reçoit la réponse d'établissement qui véhicule les informations de ressource relatives à la liaison directe, obtenir les informations de ressource relatives à la liaison directe.

16. Dispositif d'accès source selon la revendication 10, dans lequel le module d'envoi (403) est configuré en outre pour : lorsqu'il est déterminé que le dispositif d'accès source n'entretient pas une relation de coordination avec le dispositif d'accès cible, envoyer une requête d'abandon à la station source, de sorte que, lorsqu'elle reçoit la requête d'abandon, la station source abandonne l'établissement de la liaison directe avec la station cible.

17. Dispositif d'accès source selon la revendication 10, dans lequel la réponse de découverte est reçue par la station source dans une durée préétablie suivant l'envoi de la requête de découverte.

18. Dispositif d'accès source selon l'une quelconque des revendications 10 à 17, dans lequel la station source et la station cible échangent des informations à l'aide de trois liaisons respectivement entre la station source et le dispositif d'accès source, entre le dispositif d'accès source et le dispositif d'accès cible et entre le dispositif d'accès cible et la station cible, aux fins d'obtenir un mot de passe préétabli entre les deux stations et, suite à l'établissement de la liaison directe, la station source et la station cible obtiennent une clé de communication selon le mot de passe préétabli et communiquent sur la base de la clé de communication.
